# EUROPEAN PATENT APPLICATION

(11) **EP 1 220 446 A1**
(43) Date of publication of application: **03.07.2002**
(21) Application number: 01309926.2
(22) Date of filing: 26.11.2001
(51) Int. Cl.: H03J 1/00, H04N 5/50

(54) **Predictive tuning on multi-tuner broadcast data receivers**

(30) Priority: 02.12.2000 GB 0029464
(71) Applicant: Pace Micro Technology Ltd, Saltaire, Shipley BD18 3LF (GB)
(72) Inventor: Baldock, Mark R., Shipley, West Yorkshire BD18 4PE (GB)
(74) Representative: Wood, Graham

(57) **Abstract**

The invention which is the subject of the application relates to a television system apparatus and method wherein the broadcast data receiver includes at least two tuners. Each tuner is controllable to tune to a frequency of a known RF carrier for data relating to one or a plurality of selectable television channels. In order to avoid or reduce the delay which can appear on screen when the user selects to change channels a method and apparatus is provided whereby, based upon previous user channel selection patterns, the apparatus predicts the channel which is next to be selected and if one of the tuners is free, that tuner is controlled to tune to the RF carrier frequency for the predicted channel such that the data for that channel is available, should the channel subsequently be selected by the user.

## Description

The invention to which this application relates is a Broadcast Data Receiver (BDR) of the type which is used to receive data, typically digital data, which is broadcast from a remote location. The data is typically transmitted from a broadcast location by a commercial broadcast organisation, to a plurality of receiving locations, such as domestic premises in which a broadcast data receiver is located. The data can be transmitted via any of a number of methods such as, satellite transmission systems, cable transmission systems or terrestrial broadcast systems.

In this type of system the BDR receives the data in an encoded form which is designed to maximise the amount of data which can be carried in the data stream. At the BDR, the data is decoded and processed to allow the generation of audio, video and/or auxiliary information via a display screen such as that of a television set, which is connected to the BDR or the BDR is provided as an integral part of the television set.

The data carried is transmitted in "streams" of data which are typically "carried" to the receiving locations on a series of radio frequency (RF) carriers or signals at different frequencies. In practice, this means that the data; audio, video and auxiliary; for a particular channel and/or a number of the said channels are carried on each of the carriers.

Thus, when a user of the broadcast system at a particular location wishes to change television channels using any of the conventional channel changing methods, the change is made via the broadcast data receiver. If the original channel data is located on the same RF carrier i.e. at the same frequency as the data for the newly selected channel, the change to the new channel, can take place relatively quickly with no, or minimal, delay visible to the user, so that the change appears to be instantaneous. However, if the data for the original channel and the newly selected channel are on different RF carriers i.e carriers at different frequencies, there can be a problem as now described.

When the user selects a new channel which is to be generated from data carried on a particular carrier the frequency of which differs to that on which the original or previous channel data was carried, a conventional BDR causes a tuner to navigate from the frequency of the carrier for the data for the original channel to the frequency of the carrier of the data for the newly selected channel. As this occurs, there is inevitably a brief delay as the tuner loses lock on the "outgoing" transport stream, tunes to the new frequency and acquires the "incoming" data stream required and the audio and video decoder starts to receive stable transport data for the new channel.

The aim of the invention is to eliminate or reduce this delay where possible.

In a first aspect of the invention there is provided a broadcast data receiver (BDR) for receiving broadcast digital data, said receiver including a plurality of tuners, each controlled independently for selective tuning to receive one of a range of data RF carriers at known frequencies and characterised in that a first tuner is controlled to tune to a frequency to receive data for a user selected television channel in accordance with user requirements at that instant and, if a further tuner is free at that instant, it is tuned to receive data for a channel differing to that which is selected for viewing at that instant and said channel identity is based on a prediction made by the control means for the BDR.

In one embodiment the said further tuner is tuned to receive data for a selected channel which is on the same RF carrier frequency as that to which the first tuner is receiving.

In another embodiment, the said further tuner is tuned to receive data for the selected channel which is on an RF carrier at a frequency which is different to that to which the first tuner is tuned.

Typically, the further tuner resource of the multi-tuner BDR is used to acquire an RF carrier in prediction of a subsequent channel change to be made by the user on the basis of the prediction of previous user behaviour.

In one embodiment, if the predicted channel data is carried on the carrier at the same frequency as that to which the first tuner is already tuned, the prediction is ignored and the next most probably prediction generated and this continues until a channel with data on a carrier at a different frequency is identified.

In some instances the first tuner may be used to tune to an RF carrier on which data for a user selected channel is carried and such data received, and processed, to generate a television programme at that time. In one embodiment the BDR can perform a secondary function wherein the said another tuner can be used to receive a second RF carrier and data received therefrom is stored for subsequent retrieval. The stored data can be held in a memory such as a hard disc drive, video tape or the like for user retrieval as and when the user requires. If the tuner is not used for this secondary purpose at any time the further tuner is effectively free and, in a preferred embodiment, when the BDR does identify that this is the case, it performs a prediction to identify a channel and RF carrier for the same based on previous user channel selection patterns and, based on this, tunes the further tuner to the RF carrier on which the predicted channel is located. In one embodiment, the previous user channel selection patterns are based on the actual BDR user or user's channel selections which are stored in memory in the BDR for reference. In addition, or alternatively, the previous user channel selection patterns are generic data provided by the broadcaster.

This therefore means that subsequent to the channel prediction operation, if the user does select the predicted channel, the BDR can immediately change to receive the data for that channel from the said further tuner which is already tuned to receive that channel, thus eliminating or reducing the delay which conventionally occurs when the first tuner was required to move between RF carriers, or the further tuner is required to tune to receive the channel only once the selection has been made.

Typically, the prediction is undertaken on the basis of previous user channel selection data which is stored in a memory and accessible by the control means for the tuners. Thus the BDR can control a tuner to tune to a predicted channel where the original channel selected is identified as part of the prediction process and, with reference to that channel, data relating to a channel or channels which have been subsequently selected by the user on previous occasions is held in a memory and referred to and from this data the channel identity is predicted and an unused or free tuner of the BDR is tuned to the appropriate RF carrier for the channel data.

In one embodiment, it is the RF carrier on which the identified channel is carried which is identified and the unused or free tuner is used to tune into the appropriate carrier, preferably before the user makes the said channel selection.

Typically, if the user subsequently selects a channel which is not the predicted channel, then the conventional tuning procedure is performed to obtain the selected channel.

In a further embodiment, if a number of further tuners are provided then a number of predicted channels can be selected and the carriers tuned to.

Typically, the BDR monitors the user's real-time channel selection behaviour and attempts to predict the users next action and set up the tuning resources appropriately to eliminate a delay in changing RF carriers. Thus, when the BDR usage pattern does not require all tuners to be locked to specific RF carrier frequencies, any spare tuning capability can be assigned to predictive tuning as a background activity.

Should the user's profile change, for example, if the user initiates data stream recording from one RF carrier whilst continuing to watch a channel from another, predictive resources are freed for the primary application's use. Thus in a preferred embodiment the predictive tuning can be resumed when resource availability permits. Depending upon the prediction algorithm and the spontaneity or eccentricity of the user, the system's prediction of the next channel and/or carrier may be right or wrong but will, in many cases, match the user's responses thus improving apparatus performance and the consumer experiences fewer frustrating pauses, especially when the user is relatively rapidly selecting channels and, to the user, the BDR is perceived to be more responsive to their selections.

In a further aspect of the invention there is provided a method for controlling the tuning of a plurality of tuners provided in a broadcast data receiver for broadcast digital data, said receiver including a plurality of tuners for selective tuning independently to receive one of a range of RF data carriers which are transmitted from a broadcaster over a range of RF radio frequencies, said BDR allowing the selection by the user of a television channel for viewing via a display screen and speakers connected with the broadcast data receiver and characterised in that a first tuner is controlled to tune to a particular frequency for an RF data carrier to receive data for a user selected television channel to be viewed via the broadcast data receiver and, if a further tuner is free at that instant, said further tuner is tuned to receive data for a channel differing to that which is selected for viewing at that instant and said channel identity is based on a prediction made by the control means for the broadcast data receiver.

Typically the channel selected for viewing is identified as part of the channel prediction process and, with reference to that channel, reference is made to a memory means in which data relating to previous channel selection patterns is held and the channel or channels which have been subsequently selected by the user on previous occasions is referred to and from this data, a predicted channel identity is determined and the further tuner of the BDR is tuned to the appropriate RF carrier for the predicted channel data.

A specific embodiment of the invention is now described with reference to the accompanying figures, wherein:-
Figure 1 illustrates a schematic diagram of the BDR in accordance with the invention; and
Figure 2 illustrates the apparatus of the invention.

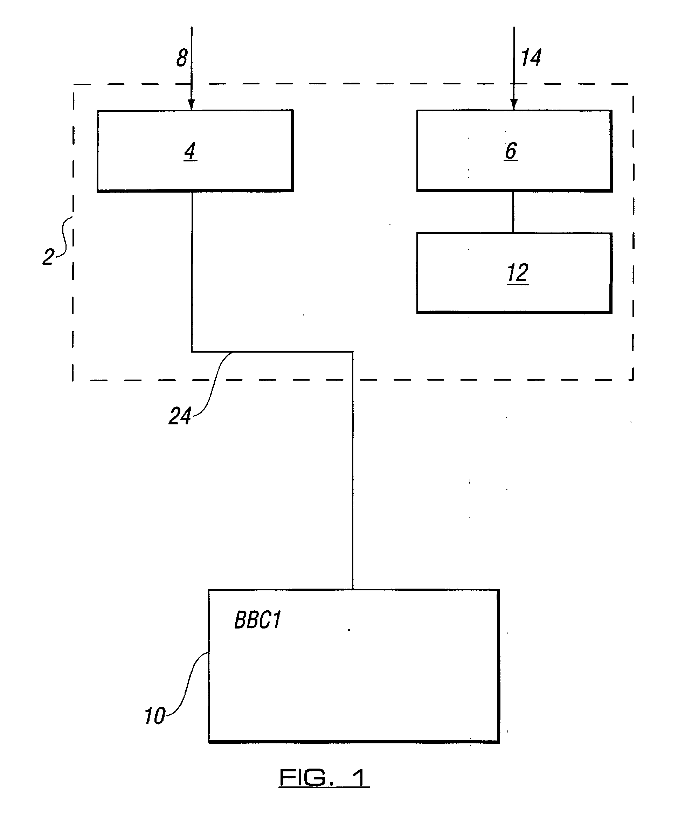

The BDR 2, as illustrated in Figure 1, includes, amongst many other components for decoding and processing received digital data, a first tuner 4, and second tuner 6, each independently controlled to tune to a specific RF frequency to receive a data carrier at a frequency specified by the BDR. The frequency is specified in response to a user selection in the control of the BDR as will be described. In the instance shown, the tuner 4 is tuned to receive data for the carrier of data for the channel BBC1, and transmits a data stream 24 to allow the same to be viewed on display screen 10 and via speakers, not shown, typically those of a television set, and this is referred to as the primary function 8. The tuner 6 is tuned to a frequency to receive data for the channel SKY1 and said data is stored in the memory 12 for the subsequent display of the same at a later date. This part is referred to as a secondary function 14 and is not part of the invention but is explained to illustrate that there are a number of functions to which the tuners may be put in normal operation of the BDR. Thus, as illustrated neither tuner 4, 6 is "free" at the instant shown.

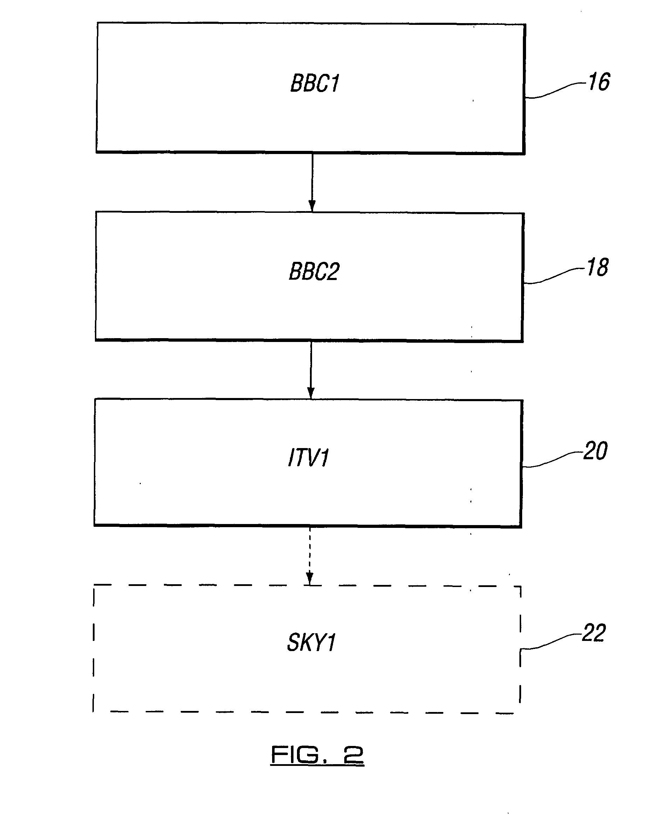

In a specific embodiment of the invention the control system for the BDR 2 monitors the user's recent history of BDR controls, such as by remote control key presses, to make channel selections and determines that, in this example, the last three events were all "Channel Up" actions as shown in Figure 2, to select channels 16, 18, 20, 22 in sequence. At the instant shown the user has selected, and is viewing ITV1, 20 with the tuner 4 tuned to receive the data for that channel. Consequently, the control means software for the BDR concludes that the next action is likely also to be a "Channel Up" selection action by the user with a high degree of probability. As the BDR software does not require the second tuner 6 to perform the secondary service 14 at this time, the BDR software determines from the user's channel list the next channel which would be selected by the "Channel Up" selection, in this case the next ascending channel 22 "SKY1". The data for the predicted channel is identified as being on an RF carrier of a different frequency to that of the currently viewed channel. According to the present invention and with the second BDR tuner 6 available to it, the BDR sets the second tuner 6 to tune to the new predicted RF carrier for the channel 22 in advance of the user pressing the "Channel Up" key. When the next user channel selection is made, if it is in accordance with the predicted channel, the control means switches from the data transport stream from tuner 4 to the data transport stream from tuner 6 with minimal delay as the "incoming" data transport stream for the predicted channel SKY1, 22 will already have stabilised as it is already being received on the tuner 6 so that all that is required is for the BDR to change between tuners from which the data stream is obtained and then generate the newly selected channel.

A practical example of the invention is provided in which the procedure is followed;

The BDR maintains a set of user tuning "events", for each of which there is a record of the frequency of occurrence over some period of time (say since the BDR was last switched on) and, optionally, over the lifetime of the box. For each event there is also a "running score", which is a weighted probability of occurrence of the associated event.

Events are defined for each user interaction that would potentially affect the tuning to incoming carriers. For example, the BDR data might include events, "the user has just changed downward a channel in the numerically ordered list of favourite channels" and "the user has just selected a specific channel by number". Events can be generic, as in the first example, or specific, as in "the user has just selected their third most frequently watched channel". They can also be defined in relation to the user's preferred channel listing, which is already generally maintained in memory by BDR's.

Each time an event is detected, the frequency of occurrence is incremented, and added to the user selection pattern. Thus, over time, the factor added to the running score for a given event will be proportional to the frequency and probability of the event occurring again.

At intervals, the user selection patterns for all events are reduced by a constant factor, modelling the passage of time. This weights the user behaviour over the shorter term. Although a particular event may be the most common one performed by the user (e.g "channel up") it may, nevertheless, not have been undertaken for a considerable period. By reducing the weighting with time, the event becomes progressively less significant until it occurs again.

At any given time, the carriers to be tuned predictively are assigned to the available tuning resources in descending order of running score. For this purpose, the events are logically sorted by descending score. The actual carriers are read from the channel listing table as needed. For example, if the user is on channel 20 and the prediction is "channel up", the carrier for channel 22 is looked up. If the user is currently watching channel 16, the prediction is "channel up", the carrier for channel 18 is looked up.

Some predictive events would identify a carrier to which the first tuner 4 is already tuned, in which case that action could be ignored and the next highest probability event taken into account, and so on.

The interval of prediction can be adjusted by frequency of user interaction, i.e. if the user is selecting channels rapidly the predictions need to be made more frequently, with a maximum limit determined by the minimum data acquisition time, as there is no point in returning before stable data is received.

Thus an improved usage of the system is achieved in accordance with the invention.

## Claims

1. A broadcast data receiver (BDR) for receiving broadcast digital data, said receiver including a plurality of tuners, each controlled independently for selective tuning to receive one of a range of data RF carriers at known frequencies and **characterised in that** a first tuner is controlled to tune to a frequency to receive data for a user selected television channel in accordance with user requirements at that instant and, if a further tuner is free at that instant, it is tuned to receive data for a channel differing to that which is selected for viewing at that instant and said channel identity is based on a prediction made by the control means for the BDR.

2. A broadcast data receiver according to claim 1 **characterised in that** the said further tuner is tuned to receive data for a predicted channel which is on the same RF carrier frequency as that to which the first tuner is tuned.

3. A broadcast data receiver according to claim 1 **characterised in that** the said further tuner is tuned to receive data for the predicted channel which is on an RF carrier at a frequency which is different to that to which the first tuner is tuned.

4. A broadcast data receiver according to claim 1 **characterised in that** the predicted channel data is carried on an RF carrier at the same frequency as that to which the first tuner is already tuned, the prediction is ignored and the next most probable prediction generated and this continues until a channel with data on an RF carrier at a different frequency is identified.

5. A broadcast data receiver according to claim 1 **characterised in that** the first tuner is tuned to an RF carrier on which data for a user selected channel is carried and such data received, and processed, to generate a television programme at that time and the further tuner is used to receive data for a second channel and data received for that channel is stored for subsequent retrieval and when a tuner is being used for neither of said functions it is deemed to be free and controlled to tune to a predicted channel.

6. A broadcast data receiver according to claim 1 **characterised in that** the further tuner of the multi-tuner BDR is used to tune to the RF carrier for a channel predicted to be subsequently selected by the user, on the basis of a prediction made referring to previous user channel selection patterns.

7. A broadcast data receiver according to claim 6 **characterised in that** the previous user channel selection patterns are based on the actual BDR user or user's channel selections which are stored in memory in the BDR for reference.

8. A broadcast data receiver according to claim 6 **characterised in that** the previous user channel selection patterns are generic data provided by the broadcaster and stored in the BDR memory.

9. A broadcast data receiver according to claim 1 **characterised in that** if the user does subsequently select to change the BDR to generate and display a channel, and said channel matches the predicted channel, the BDR selects to receive the data for that channel from the said further tuner which is already tuned to receive the data for the predicted channel.

10. A broadcast data receiver according to claim 1 **characterised in that** the RF carrier on which the predicted channel data is carried is identified and the further tuner, if free at that instant, or as soon as the same is free from performing other functions, is used to tune to the appropriate carrier frequency.

11. A broadcast data receiver according to claim 1 **characterised in that** if the user does subsequently select a new channel to view and said selected channel does not match the predicted channel the BDR controls one of said tuners to tune to the appropriate RF carrier for the data for the selected channel.

12. A broadcast data receiver according to claim 1 **characterised in that** if more than two tuners are provided in the BDR a number of predicted channels can be selected and the carriers tuned to.

13. A method for controlling the tuning of a plurality of tuners provided in a broadcast data receiver for broadcast digital data, said receiver including a plurality of tuners for selective tuning independently to receive one of a range of RF data carriers which are transmitted from a broadcaster over a range of RF radio frequencies, said BDR allowing the selection by the user of a television channel for viewing via a display screen and speakers connected with the broadcast data receiver and **characterised in that** a first tuner is controlled to tune to a particular frequency for an RF data carrier to receive data for a user selected television channel to be viewed via the broadcast data receiver and, if a further tuner is free at that instant, said further tuner is tuned to receive data for a channel differing to that which is selected for viewing at that instant and said channel identity is based on a prediction made by the control means for the broadcast data receiver.

14. A method according to claim 13 **characterised in that** the channel selected for viewing is identified as part of the channel prediction process and, with reference to that channel, reference is made to a memory means in which data relating to previous channel selection patterns is held and the channel or channels which have been subsequently selected by the user on previous occasions is referred to and from this data, a predicted channel identity is determined and the further tuner of the BDR is tuned to the appropriate RF carrier for the predicted channel data.
